# EUROPEAN PATENT APPLICATION

(11) **EP 3 967 623 A1**
(43) Date of publication of application: **16.03.2022**
(21) Application number: 21150792.6
(22) Date of filing: 08.01.2021
(51) Int. Cl.: B65D 55/02, B65D 55/14, B65D 77/04

(54) **CONTAINER VALVE NODE SYSTEM**

(30) Priority: 15.09.2020 US 202017021214
(71) Applicant: In-Tech Enterprise Ltd., Kowloon (HK)
(72) Inventor: POPE, Gordon Christopher, Hong Kong (HK); TSE, Mak, Hong Kong (HK); CHIM, Cheuk Kuen, Hong Kong (HK); TSANG, Jacky Sai Ping, Hong Kong (HK)
(74) Representative: Nordmeyer, Philipp Werner

(57) **Abstract**

A container system includes a container that includes a container chassis that defines a container volume and a container outlet having a first aperture. The container system includes a valve system is coupled to the container outlet and a container valve node system. The container valve node system includes a valve system coupling device coupling the container valve node system to at least one of the container outlet or the valve system, and includes a node device coupled to the valve system coupling device. The node device includes a node chassis that houses a communication system, a processing system coupled to the communication system, and a memory system that is coupled to the processing system and that includes instruction that causes the processing system to provide a container engine configured to communicate container system information associated with the container system via the communication system.

## Description

### CROSS REFERENCE TO RELATED APPLICATIONS

This application is related to United States Utility Application Serial Number 17/021,140 (attorney docket number 55700.7US01), filed September 15, 2020, the disclosure of which is incorporated herein by reference in its entirety.

### FIELD OF THE DISCLOSURE

This disclosure relates generally to containers, and, more particularly, to closure security systems for container valves.

### BACKGROUND

Containers may be used for storage, shipping, and packaging of a variety of products. For example, intermediate bulk containers (IBCs), drums, barrels, bottles, and/or other containers are designed for the transport and storage of bulk liquid and granulated substances such as chemicals, food ingredients, solvents, pharmaceuticals, hazardous materials, and/or a variety of other goods and products known in the art. Containers typically provide one or more openings that allow access to the containers through which the container may be filled with the product, and/or through which the product may be dispensed from the container. During shipment and storage, these openings may be obstructed with a variety of closures such as, for example, caps, plugs, tops, valves, lids, and other closures. These closures provide many benefits for the container and the product being shipped and/or stored within the container such as, for example, preventing the product within the container from escaping, preventing materials from outside of the container from entering the container and contaminating the product, preventing spoilage, as well as other uses that would be apparent to one of skill in the art.

Conventional closures attempt to provide container security by including seals that, when broken, indicate whether the container has been opened, prior to, or subsequent to filling the container with the product. Due to the nature of some products being shipped in containers, seals may be important for tracking and determining whether the product within the container has been tampered with (e.g., lost, stolen, and/or contaminated) and/or accessed for legitimate purposes. For example, high value liquids used in agrochemical industries may be stolen and/or replaced with counterfeit products, and products used in food industry may require integrity and/or traceability. Such conventional container security systems provide the ability to detect whether the container has experienced tampering by visual inspection of the seal. However, these conventional container security systems are subject to circumvention. For example, the seal may be broken, the closure removed, the product in the container replaced, diluted, or stolen (e.g., during shipment), and the closure and the seal then duplicated and replaced on the container such that the tampering with the product goes undetected.

### SUMMARY

According to one embodiment, a container system, includes a container that includes a container chassis that defines a container volume and a container outlet having a first aperture; a valve system coupled to the container outlet, and a container valve node system, wherein the container valve node system includes: a valve system coupling device coupling the container valve node system to at least one of the container outlet or the valve system; and a node device coupled to the valve system coupling device, wherein the node device includes a node chassis that houses: a communication system; a processing system coupled to the communication system; and a memory system that is coupled to the processing system and that includes instruction, that when executed by the processing system, causes the processing system to provide a container engine that is configured to: communicate container system information associated with the container system via the communication system.

According to another environment a container valve node system, includes: a valve system coupling device that is configured to couple with at least one of a container outlet defined by a container chassis that defines a container volume or a valve system that is configured to couple to the container outlet; and a node device coupled to the valve system coupling device, wherein the node device includes a node chassis that houses: a communication system; a processing system coupled to the communication system; and a memory system that is coupled to the processing system and that includes instruction, that when executed by the processing system, causes the processing system to provide a container engine that is configured to: communicate container system information associated with a container system via the communication system.

According to yet another embodiment, a valve system coupling device, includes: at least one strap portion that is configured to couple with and decouple from at least one of a container outlet defined by a container chassis that defines a container volume or a valve system that is configured to couple to the container outlet; and a node device engagement member that is coupled to the valve system coupling system and that includes at least one node device securing element that when engaged with a respective at least one strap securing element using a first force requires a second force that is greater than the first force to decouple the at least one node device securing element from the respective at least one strap securing element.

### BRIEF DESCRIPTION OF THE DRAWINGS

Fig. 1 is a perspective view illustrating an embodiment of a container system.
Fig. 2 is a perspective view illustrating an embodiment of a container closure system connected to a container outlet defined by a container chassis of a container of the container system of Fig. 1.
Fig. 3A is a perspective view illustrating an embodiment of a valve system coupling device that is included in a container valve node system of the container system of Fig. 1.
Fig. 3B is a top view illustrating an embodiment of the valve system coupling device of Fig. 3A.
Fig. 4A is a perspective view illustrating an embodiment of a node device included in the container valve node system of Fig. 1.
Fig. 4B is a schematic view illustrating an embodiment of the node device included in the container valve node system of Fig. 1.
Fig. 5 is a flow chart illustrating an embodiment of a method of coupling a container valve node system to a valve system.
Fig. 6A is a perspective view illustrating an embodiment of the container valve node system being secured to the valve system during the method of Fig. 5.
Fig. 6B is a front view illustrating an embodiment of the container valve node system secured to the valve system during the method of Fig 5.
Fig. 6C is a section view illustrating an embodiment of the container system along the plane A-A in Fig. 6B during the method of Fig. 5.
Fig. 7 is a flow chart illustrating an embodiment of a method for providing container security.

Embodiments of the present disclosure may be understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

Embodiments of the present disclosure include a container valve node system, as well as methods for coupling the container valve node system to a container closure system, and performing container system event actions that may be used to track access to a container and its contents. As discussed above, existing seals and closures for containers do not prevent tampering with the containers and products provided within those containers, as it has been found that the conventional closures and seals are easily reproduced and replaced on tampered-with containers such that it is difficult for legitimate parties (e.g., a container manufacturer, a container filler, a container transporter, a container end user, and other parties) associated with the container to detect tampering with the closure and/or seal. Furthermore, some industries may require that access to the container volume be tracked during the lifecycle of the container and conventional seals and closures lack tracking capabilities. Further still, containers, such as intermediate bulk containers (IBCs), are often standardized and include standard components such as closures and valves that allow end users to quickly fill, empty, and/or clean the IBC using specifically designed tools for the standard components. For example, various hoses and attachments may be coupled to valve systems when removing the contents stored in the container.

As would be appreciated to one of skilled in the art, IBCs typically go through a specific container lifecycle where the IBC is manufactured on a highly organized assembly line, shipped to a customer that fills the IBC with a material, subsequently shipped to an end user that empties the material out of the IBC, and returned to the manufacturer for reconditioning, which includes breaking down the IBC into various components for reuse and recycling. Thus, when adding a closure security system and node devices, such as those developed by some of the inventors of the present disclosure, and that are described in the U.S. Patent No. 10,538,371 and that are described in U.S. Patent Application No. 16/451,879, filed on June 25, 2019, entitled "Container Security System," the disclosures of which are incorporated by reference herein in their entirety and that provides for the detection of whether a container closure and/or a container has experienced a container system event (e.g., a tamper event), these manufacturing and tooling requirements must be taken into consideration so as to not unduly disrupt the IBC lifecycle.

In various embodiments of the present disclosure, a container valve node system is disclosed. The container valve node system may include a valve system coupling device that couples the container valve node system to a valve system. The valve system may be coupled to a container outlet that provides a container opening to a container, (e.g., an IBC). The valve system may be used to selectively permit material to be moved via the container outlet into or out of the container volume. In a specific example illustrated and discussed in the present disclosure, the valve system may be an IBC's valve system. However, one of skill in the art in possession of the present disclosure will recognize that other container closures and valve systems will benefit from the teachings of the present disclosure. The valve system coupling device may include at least one strap portion that is configured to engage with a valve housing included on the valve system and/or the container outlet defined by the container chassis. The valve system coupling device, when coupled with the valve system and/or container outlet, may prevent rotational movement of the valve system coupling device and the container valve node system device relative to the valve system and/or the container chassis. In other words, if the valve system that is often threaded onto the container outlet is turned, the container valve node system will turn with the valve system or vice versa. The at least one strap portion, when coupled together and engaged with the valve system and/or the container outlet, may also prevent or provide resistance to other directional movement of valve system coupling device and the container valve node system relative to the valve system and the container chassis as well.

The container valve node system may also include a node device that may include some or all of the components of the container valve node system discussed above. The node device may be coupled to the strap portion of the valve system coupling device via a node device engagement member included on the at least one strap portion. In some embodiments, the node device may be detachable from the node device engagement member via a node device release member. The node device and the valve system coupling device are configured such that, when engaged with the valve system, the node device chassis is substantially adjacent a handle and/or a stem included on the valve system and/or the container chassis such that the node device may monitor a valve orientation of a valve element in the valve system and/or a level of the contents of the container volume via one or more sensors included on or in the node device.

In various embodiments, the node device includes a power source, at least one sensor, a communication system that may include one or more types of communication interfaces, and a processing system. The node device may also include a memory system that is coupled to the processing system and that includes instruction, that when executed by the processing system, causes the processing system to provide a container engine that detects, via the at least one sensor, that a container system event has occurred and provides, via the communication system, a container system event notification for the container system event. As such, the container valve node system of the present disclosure may provide relative easy and quick attachment and detachment of the container valve node system and a node device that provides security to a container system without disrupting a conventional container lifecycle and allow for conventional tools to access the valve system.

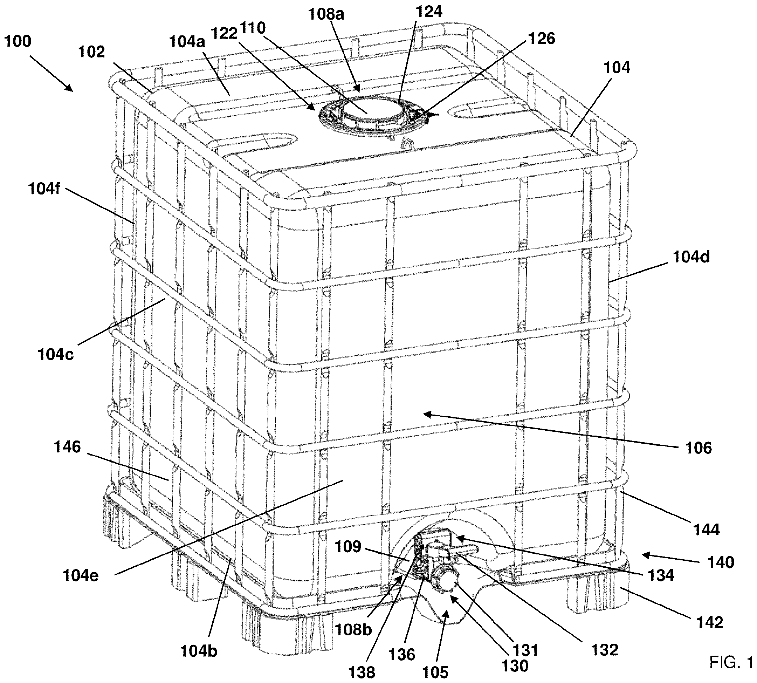

Referring now to Figs. 1, an embodiment of a container system 100 is illustrated. The container system 100 includes a container 102 having container chassis 104 that includes a top wall 104a, a bottom wall 104b that is located opposite the container chassis 104 from the top wall 104a, and a pair of side walls 104c and 104d that are located opposite the container chassis 104 from each other and that extend between the top wall 104a and the bottom wall 104b. The container chassis 104 may include a front wall 104e that extends between the top wall 104a, the bottom wall 104b, and the side walls 104c and 104d, and a rear wall 104f that that is located opposite the container chassis 104 from the front wall 104e and that extends between the top wall 104a, the bottom wall 104b, and the side walls 104c and 104d. A container volume 106 is defined by the container chassis 104 by the top wall 104a, the bottom wall 104b, the side walls 104c and 104d, the front wall 104e, and the rear wall 104f. In the illustrated embodiment, the top wall 104a defines a container aperture 108a and the front wall 104e defines a container aperture 108b that is located adjacent the bottom wall 104b such that a fluid or other material may be moved into or out of the container volume 106 via the container aperture 108b. In some embodiments, the container chassis 104 may define a container outlet 109 that defines the container aperture 108b. Further still, the container chassis 104 may define a valve system recess 105 that may be defined such that when a container closure system 130, which includes a valve system 132, is coupled to the container outlet 109, the container closure system 130 minimally extends (if at all) past the plane of the front wall 104e. As such, the valve system recess 105 may provide a space where the container closure system 130 may be provided to minimize damage to the container closure system 130 during transport of the container system 100. The location of the container closure system 130 within the valve system recess 105 may also allow for stacking and storage of the multiple container valve systems without the valve system 132 interfering. While a specific example of the container 102 is illustrated and described below (e.g., an IBC), one of skill in the art will recognize that the teachings of the present disclosure will be beneficial to container systems including a variety of containers (e.g., drums, barrels, bottles, and/or other containers) and/or other container apertures that may be on any of the walls 104a-104f that would be apparent to one of skill in the art in possession of the present disclosure, and thus systems including those containers will fall within the scope of the present disclosure as well.

In various embodiments, the container system 100 may include a container closure 110 that is coupled to the container 102 on the top wall 104a. The container closure 110, when coupled to the top wall 104a, may be configured to prevent movement of contents (e.g., a material, a substance, and/or a product) of the container volume 106 to and/or from the container volume 106 via the container aperture 108a. While a specific example of a container closure 110 is illustrated and described below, one of skill in the art in possession of the present disclosure will recognize that the teachings of the present disclosure will be beneficial to other container closures and that may be provided on any of the walls 104a-104f to prevent movement of materials, substances, and/or products to and/or from the container volume via one or more container apertures provided on one or more of those walls 104a-104f, and thus systems including those containers closures will fall within the scope of the present disclosure as well.

In various embodiments, the container system 100 may include a container closure node system 122. The container closure node system 122 may include a closure chassis coupling device 124 that is configured to couple the container closure node system 122 to the container closure 110. The container closure node system 122 may include a node device 126 that is coupled to the closure chassis coupling device 124. As such, the container closure node system 122 may be the container closure node system 122 described in U.S. Patent Application No. 17/021,140, attorney docket number 55700.7US01, filed on September 15, 2020 along with the present disclosure. One of skill in the art in possession of the present disclosure will recognize how embodiments of the present disclosure may be combined with some or all of the disclosure discussed above, and thus that disclosure is incorporated by reference herein in its entirety.

In various embodiments, the container system 100 may include a container closure system 130. The container closure system 130 may be coupled to the container aperture 108b and configured to prevent and/or permit movement of the contents of the container 102 to and/or from the container volume 106 via the container aperture 108b. In the illustrated example, the container closure system 130 may include a container closure 131 and the valve system 132, described in further detail below. While a specific container closure system 130 is illustrated, one or skill in the art in possession of the present disclosure will recognize that other container closures may be provided that may benefit from the teachings of the present disclosure.

In various embodiments, the container system 100 may include a container valve node system 134. The container valve node system 134 may include a valve system coupling device 136 and a node device 138. In various embodiments, the node device 138 may include a processing system, a memory system, a short-range communication interface, and in some embodiments, a long-range communication interface and that is described as the container module in the U.S. Patent No. 10,538,371 and that is described in U.S. Patent Application No. 16/451,879, filed on June 25, 2019, entitled "Container Security System," the disclosures of which are incorporated by reference herein in their entirety. While a specific container valve node system 134 is illustrated, one or skill in the art in possession of the present disclosure will recognize that other container valve node systems may be provided that may benefit from the teachings of the present disclosure.

In various embodiments, the container system 100 may also include a cage system 140 that is configured to house the container 102. The cage system 140 may include a pallet base 142 coupled to a cage 144. While a specific container system 100 has been illustrated and described, one of skill in the art in possession of the present disclosure will recognize that the container system 100 of the present disclosure may include a variety of components and component configurations while remaining within the scope of the present disclosure as well.

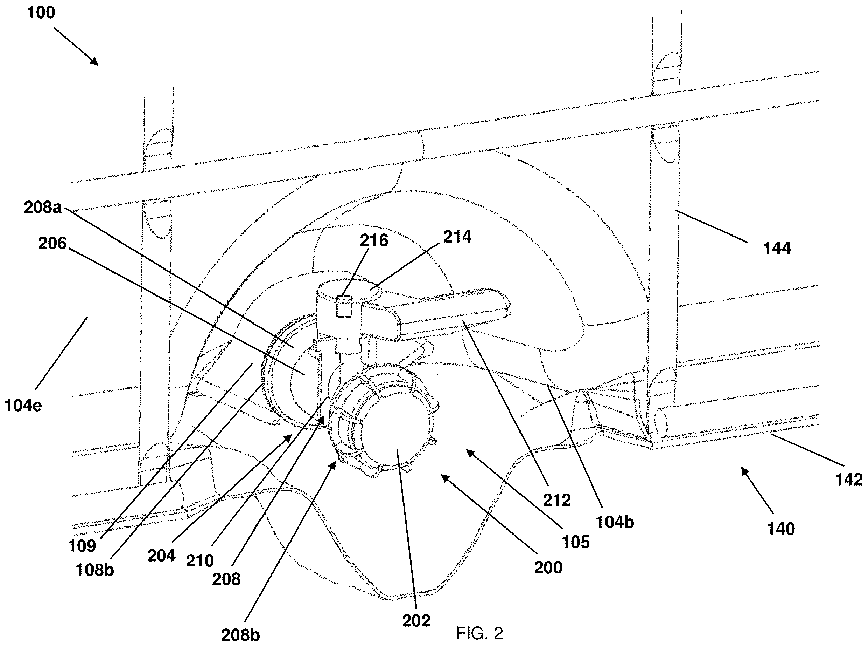

Referring now to Fig. 2, an embodiment of a container closure system 200 is illustrated that may provide the container closure system 130 included in the container system 100 discussed above with reference to Fig. 1. The container closure system 200 may include a container closure 202 that may provide the container closure 131 discussed above with reference to Fig. 1, and a valve system 204 that may provide the valve system 132 discussed above with reference to Fig. 1. The valve system 204 may include a valve housing 206 that defines an interior chamber 208 connecting a container outlet port 208a and a front port 208b. The container outlet port 208a is may couple with the container outlet 109. For example, the container outlet 109 may include an internal thread and/or an external thread that the container outlet port 208a may threadably connect to the container outlet 109. In some examples, the container outlet port 208a may be inserted into the container aperture 108b and a fitting may be threaded onto the container outlet 109 to couple the valve housing 206 to the container outlet 109. However, one of skill in the art in possession of the present disclosure will recognize that the valve system 204 may be coupled to the container outlet 109 in a variety of ways and still fall under the scope of the present disclosure.

In various embodiments, a valve element 210 may be rotationally supported in the interior chamber 208 for movement between a valve open orientation and valve closed orientation. The valve element 210 may include a butterfly valve, a ball valve, or any other valve that would be apparent to one of skill in the art in possession of the present disclosure. In the valve open orientation, an opening in the valve element 210 is aligned with the front port 208b and the container outlet port 208a. In the valve closed orientation, the opening is oriented in a plane perpendicular to a longitudinal axis of the valve element 210 so that there is no fluid communication between the front port 208b and the container outlet port 208a. A handle 212 includes a stem 214. The stem 214 extends through a housing opening to be operatively coupled with the valve element 210 for selective rotation of the valve element 210 between the open orientation and the closed orientation. In various embodiments, the handle 212 and/or the stem 214 may include a sensor element 216 that may include a sensor (e.g., motion sensor) and/or a sensor detection element (e.g., a magnet to be sensed by a Hall effect sensor). The sensor element 216 may be included in the handle 212 and/or the stem 214 such that the sensor element 216 may rotate with the handle 212 and/or stem 214 as the valve element 210 is being selectively rotated between the open orientation and the closed orientation.

In various embodiments, the container closure 202 may be configured to couple to the front port 208b. For example, the container closure 202 may include an internal thread and/or an external thread that the front port 208b may threadably connect to the container closure 202. In some examples, container closure 202 may be a cap that is threaded onto the front port 208b, a cap that is frictionally coupled to the front port 208b, a plug that is inserted into valve housing 206 via the front port 208b, and/or any other container closure that prevents the movement of materials via the container aperture 108b of the container 102 that would be apparent to one of skill in the art in possession of the present disclosure when the valve element is in either the open orientation or the closed orientation.

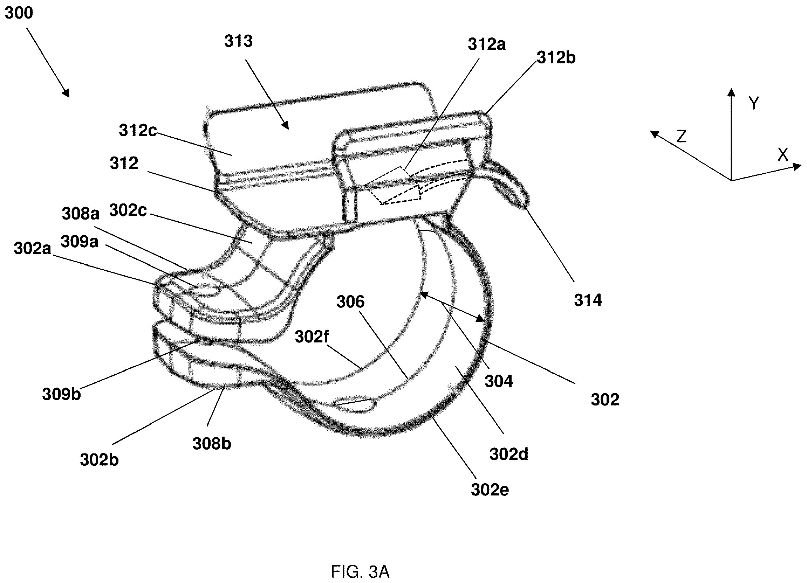

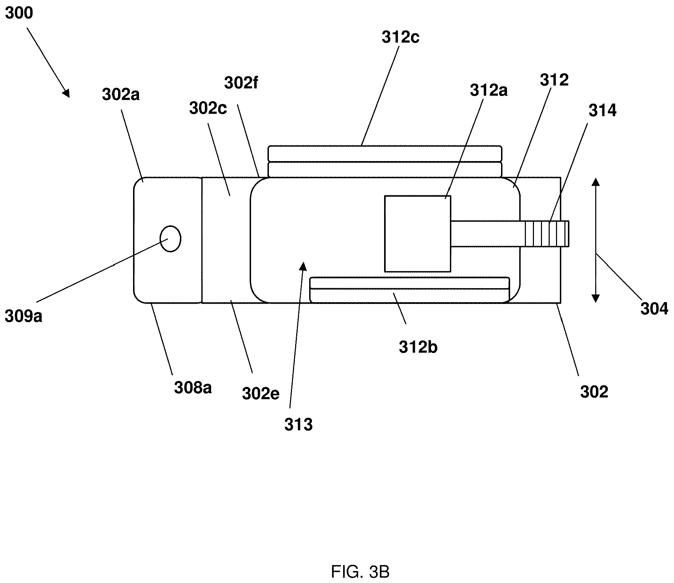

Referring now to Figs. 3A and 3B, an embodiment of a valve system coupling device 300 is illustrated that may provide the valve system coupling device 136 included in the container valve node system 134 discussed above with reference to Fig. 1. The valve system coupling device 300 may be configured to couple the container valve node system 134 to the container outlet 109 and/or the valve system 132 with reference to Fig. 1. In some embodiments, the valve system coupling device 300 may couple to the container outlet 109 and/or the valve system 132 prior to the valve system 132 being coupled to the container outlet 109 and/or subsequent to the valve system 132 being coupled to the container outlet 109. In the embodiment illustrated in Figs. 3A and 3B, the valve system coupling device 300 may include a strap portion 302. While a single strap portion 302 is illustrated in Figs. 3A and 3B, the valve system coupling device 300 may include any number of strap portions that couple to each other to form the strap portion 302. The strap portion 302 may include a C-strap that may be configured to be positioned around the valve housing 206 included in the valve system 132/204 and/or the container outlet 109. The strap portion 302 may include a first end 302a and a second end 302b that is opposite the at least one strap portion 302 from the first end 302a. The strap portion 302 may also include a first surface 302c and a second surface 302d that is opposite the strap portion 302 from the first surface 302c, and the first surface 302c and the second surface 302d extend between the first end 302a and the second end 302b. The strap portion 302 may also include a first edge 302e that extends between the first end 302a, the second end 302b and the first surface 302c and the second surface 302d, and a second edge 302f that is opposite the strap portion 302 from the first edge 302e that extends between the first end 302a, the second end 302b, and the first surface 302c and the second surface 302d. The strap portion 302 may have a width 304. The width 304 may be less than a distance between of the stem 214 and the container outlet 109 when the valve system 132/204 is coupled to the container outlet 109 such that the strap portion 302 may be positioned between the stem 214 and the container outlet 109. The strap portion 302 may also have a length 306 that is at least the circumference of the valve housing 206 and/or the circumference of the container outlet 109 as illustrated in Figs. 1 and 2.

The strap portion 302 may include a strap securing element 308a that is coupled to the first end 302a of the strap portion 302 and a strap securing element 308b that is coupled to the second end 302b of the strap portion 302. In various embodiments, the strap securing element 308a may be engageable with the strap securing element 308b. For example, the strap securing element 308a may include a securing element engagement member 309a that engages a corresponding securing element engagement member 309b on the strap securing element 308b. The securing element engagement member 309a and the securing element engagement member 309b may be frictionally coupled such that once a force threshold is applied that is opposite a force used for the engagement, the securing element engagement member 309a and the securing element engagement member 309b will become disengaged. However, in other examples, the engagement of the securing element engagement member 309a and the securing element engagement member 309b may lock the securing element engagement member 309a and the securing element engagement member 309b, such that the strap portion 302 has to be destroyed to disengage the securing element engagement member 309a and the securing element engagement member 309b. In other examples, engagement of the securing element engagement member 309a and the securing element engagement member 309b may temporarily lock the securing element engagement member 309a and the securing element engagement member 309b. A securing element release member (not illustrated) may be included in at least one of the strap securing element 308a and the strap securing element 308b to disengage the securing element engagement member 309a and the securing element engagement member 309b. In the illustrated embodiment, the securing element engagement members 309a and 309b may include apertures through which a fastener may be inserted and used to secure the strap securing element 308a and the strap securing element 308b to each other. While the strap securing element 308a and the strap securing element 308b are illustrated as being coupled to each other, it is contemplated that the strap securing elements 308a and 308b may be coupled to a corresponding strap securing elements on one or more additional strap portions.

In various embodiments, when the strap portion 302 is coupled to the container outlet 109 and/or the valve system 132/204, the securing of the securing element engagement members 309a and 309b may secure the strap portion 302 and the valve system coupling device 300 to the container outlet 109 and/or the valve system 132/204 such that the strap portion 302 and the valve system coupling device 300 cannot move relative to the container chassis 104 and the valve system 132/204. For example, the strap portion 302 may be frictionally coupled to the container outlet 109 and/or the valve system 132/204 when the securing element engagement members 309a and 309b are engaged with each other such that enough pressure is created that the first surface 302c of the strap portion 302 is in contact with the container outlet 109 and/or the valve system 132/204 to provide enough friction such that the strap portion 302 cannot be rotated or moved along various axes of the container outlet 109 and/or the valve system 132/204. In other embodiments, the strap portion 302 may include one or more additional valve system securing elements that are configured to engage one or more components of the valve system 132/204 to secure the strap portion 302 to the container outlet 109 and/or the valve system 132/204.

In various embodiments, the valve system coupling device 300 may include a node device engagement member 312. The node device engagement member 312 may be configured to engage and couple the node device 138 of Fig. 1 to the valve system coupling device 300. For example, the node device engagement member 312 may be configured to engage and secure the node device 138 to the strap portion 302. In the illustrated embodiment of Fig. 3, the node device engagement member 312 extends from the first surface 302c of the strap portion 302. The strap portion 302 may include a node securing element engagement member (not illustrated) that may be configured to secure the strap portion 302 to the node device engagement member 312. However, in the illustrated embodiment, the node device engagement member 312 may be defined by the first surface 302c of the strap portion 302. The node device engagement member 312 may be configured such that, when the node device 138 is engaged with the node device engagement member 312 and the strap portion 302 is engaged with the container outlet 109 and/or the valve system 132/204, one or more sensors included on the node device 138, as discussed in more detail below, are substantially adjacent the container chassis 104 of the container 102 of Fig. 1, the handle 212 of the valve system 132/204, and/or the stem 214 of the valve system 132/204 of Figs. 1 and 2.

The node device engagement member 312 may include one or more node device securing elements 312a, 312b, and/or 312c that define a slot 313. The node device securing element 312a may be configured to engage the node device 138 and prevent movement of the node device 138 along the x-axis in at least one direction when the node device 138 is positioned in the slot 313. The node device securing element 312b may be configured to engage the node device 138 and prevent movement of the node device 138 along the x-axis in at least the direction opposite the direction along the x-axis that the node device securing element 312a secures the node device 138. The node device securing element 312b may also be configured to prevent movement of the node device 138 along the z-axis and the y-axis when the node device 138 is positioned in the slot. The node device securing element 312c may be configured to engage the node device 138 and prevent movement of the node device 138 along the y-axis in at least the direction opposite the direction along the y-axis that the node device securing element 312b secures the node device 138 when positioned in the slot 313.

One or more of the node device securing elements 312a, 312b, and/or 312c may include a node device release member 314. In the illustrated example, the node device securing element 312a may include the node device release member 314 that, when activated by a user, may disengage the node device securing element 312a such that the node device 138 may move in one or more of the directions that the node device securing element 312a was preventing the node device 138 from moving. For example, when a force is applied to the node device release member 314, the node device release member 314 may compress the node device securing element 312a such that the node device securing element 312a no longer engages the node device 138 (e.g., a strap securing element included on the node device 138, discuss below), and the node device 138 may be move along the x-axis to decouple from node device engagement member 312 by sliding out of the slot 313. While a specific valve system coupling device 300 has been illustrated and described, one of skill in the art in possession of the present disclosure will recognize that the valve system coupling device 300 of the present disclosure may include a variety of components and component configurations while remaining within the scope of the present disclosure as well.

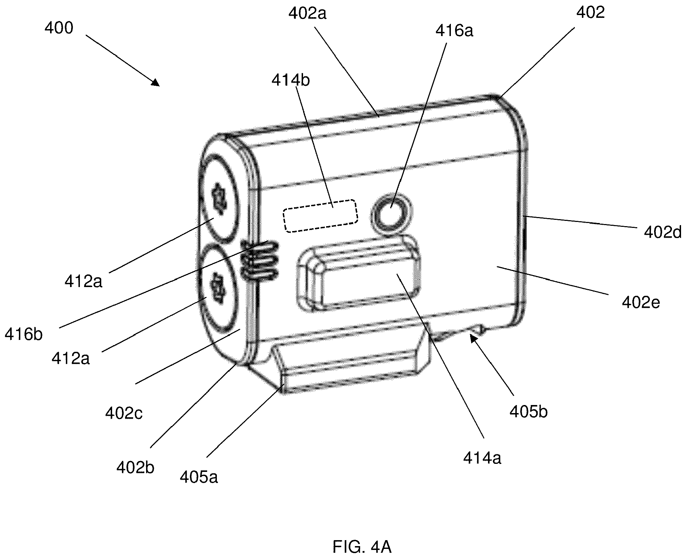

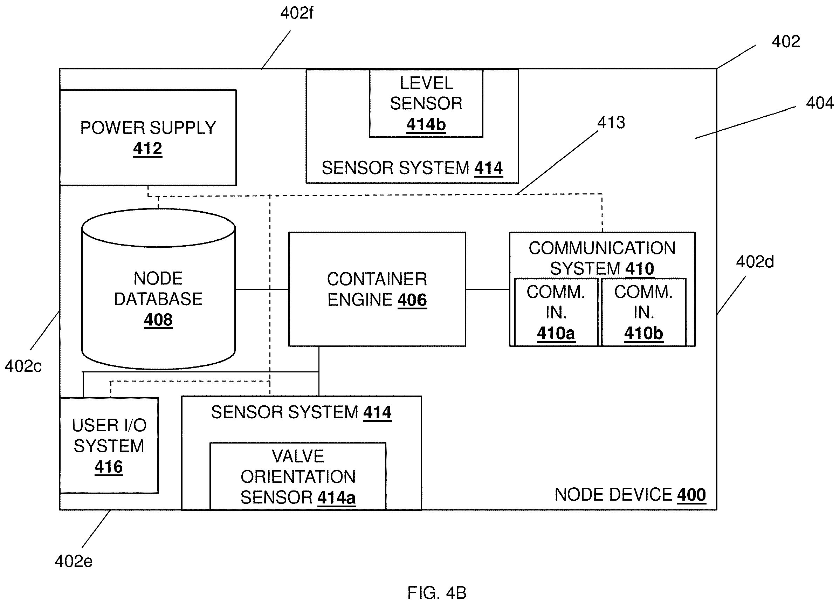

Referring now to Figs. 4A and 4B, an embodiment of a node device 400 is illustrated that may provide the node device 138 included in the container valve node system 134 discussed above with reference to Fig. 1. The node device 400 includes a node chassis 402 that includes a top wall 402a, a bottom wall 402b that is located opposite the node chassis 402 from the top wall 402a, and a pair of side walls 402c and 402d that are located opposite the node chassis 402 from each other and that extend between the top wall 402a and the bottom wall 402b. The node chassis 402 may include a front wall 402e that extends between the top wall 402a, the bottom wall 402b, and the side walls 402c and 402d, and a rear wall 402f that that is located opposite the node chassis 402 from the front wall 402e and that extends between the top wall 402a, the bottom wall 402b, and the side walls 402c and 402d. A node volume 404 is defined by the node chassis 402 by the top wall 402a, the bottom wall 402b, the side walls 402c and 402d, the front wall 402e, and the rear wall 402f. In the illustrated embodiment, the top wall 402a, the bottom wall 402b, the side walls 402c and 402d, the front wall 402e, and/or the rear wall 402f may define a component access aperture (not illustrated) that may be used to access any node components housed in the node volume 404.

In various embodiments, the node chassis 402 may include a strap securing element 405a and/or a strap securing element 405b. The strap securing element 405a may be defined by the node chassis 402 such that the strap securing element 405a may extend from the front wall 402e. The strap securing element 405a may be configured to engage with the node device securing element 312b of Figs. 3A and 3B. The strap securing element 405b may be defined by the bottom wall 402b that may define a notch or a recess that is configured to engage with the node device securing element 312a. While specific strap securing elements 405a and 405b are illustrated, it is contemplated that those strap securing elements may be defined by other node chassis walls and/or additional strap securing elements may be defined by the walls 402a-402f of the node chassis 402.

Furthermore, while illustrated and discussed as a node device 400, one of skill in the art in possession of the present disclosure will recognize that the functionality of the node device 400 discussed below may be provided by other devices that are configured to operate similarly as discussed below. In the illustrated embodiment, the node device 400 includes the node chassis 402 that houses the components of the node device 400 in the node volume 404, only some of which are illustrated below. For example, the node chassis 402 may house a processing system (not illustrated but may be provided by a processor) and a memory system (not illustrated but may be provided by system memory (e.g., random access memory (RAM) devices such as dynamic RAM (DRAM), synchronous DRAM (SDRAM), solid state memory devices, and/or a variety of other memory devices known in the art) that is coupled to the processing system and that includes instructions that, when executed by the processing system, cause the processing system to provide a container engine 406 that is configured to perform the functionality of the container engines and/or node devices discussed below. While a processing system and a memory system are discussed as providing the container engine 406, the container engine 406 may be provided by application specific integrated circuits (ASICs), field-programmable gate arrays (FPGAs), complex programmable logic devices (CPLDs) and/or any other hardware circuit that may be configured to cause a communication interface, discussed below, to provide container information, security notifications, and/or other information in response to sensor signals being generated by a sensor and/or in response to receiving an event notification from another node device.

The node chassis 402 may also house a storage system (not illustrated, but which may include mass storage devices that may include hard discs, optical disks, magneto-optical discs, solid-state storage devices, and/or a variety other mass storage devices known in the art) that is coupled to the container engine 406 (e.g., via a coupling between the storage system and the processing system) and that includes a node database 408 that is configured to store any of the information utilized by the container engine 406 discussed below.

The node chassis 402 may further house a communication system 410 that is coupled to the container engine 406 (e.g., via a coupling between the communication system 410 and the processing system). The communication system 410 may include software or instructions that are stored on a computer-readable medium and that allow the node device 400 to send and receive information through the communication networks described herein. For example, the communication system 410 may include a communication interface 410a (e.g., first (e.g., relatively long-range) transceiver(s)) to provide for communications through a wide area network (WAN). In an embodiment, the communication interface 410a may include a wireless antenna that is configured to provide communications via IEEE 802.11 protocols (Wi-Fi), cellular communications, satellite communications, other microwave radio communications, and/or utilizing any other communication techniques that would be apparent to one of skill in the art in possession of the present disclosure. The communication system 410 may also include a communication interface 410b (e.g., second (e.g., relatively short-range) transceiver(s)) that is configured to provide direct communication with user devices, sensors, other node devices, and/or other devices within proximity of the node device 400 (e.g., the node device 126) and provide for communications through a local area network (LAN). For example, the communication interface 410b may be configured to operate according to wireless protocols such as Bluetooth^{®}, Bluetooth^{®} Low Energy (BLE), near field communication (NFC), infrared data association (IrDA), ANT^{®}, Zigbee^{®}, Z-Wave^{®} IEEE 802.11 protocols (Wi-Fi), and/or any other wireless communication protocols that allow for the direct device communication described herein.

The node chassis 402 may also house a power supply system 412 that may include and/or be configured to couple to one or more batteries 412a. For example, the power supply system 412 may include an integrated rechargeable battery that may be recharged in the node chassis 402 using methods known in the art, and/or may include other power sources that would be apparent to one of skill in the art in possession of the present disclosure. For example, the power supply system 412 and node chassis 402 may be configured to accept a replaceable, non-rechargeable/rechargeable battery while remaining within the scope of the present disclosure as well. The power supply system 412 may be coupled to the container engine 406, the node database 408, the communication system 410 and/or a sensor system 414 via a power bus 413.

The node chassis 402 may also house and/or provide the sensor system 414. The sensor system 414 may include one or more sensors that obtain information about the environment around the node device 400, the valve system 132, the container chassis 104, and/or the container volume 106. For example, sensor system 414 may include a valve orientation sensor 414a (e.g., a Hall effect sensor or other motion sensor) that is provided adjacent the front wall 402e and/or housed elsewhere in node chassis 402 such that the valve orientation sensor 414a can detect when the valve element 210 has moved relative to the node device 400 (e.g., the handle 212 and/or the stem 214 positioning the valve element 210 between the open orientation and the closed orientation). For example, the valve orientation sensor 414a may include a Hall effect sensor that may detect a magnetic field provided by the sensor element 216 of Fig. 2 coupled to and/or embedded in the stem 214 and/or the handle of the valve system 204 when in a first position range and provide a first signal to the container engine 406 when in that first position range. The Hall effect sensor may also detect the lack of presence of a magnetic field or a weak magnetic field (e.g., at or below a magnetic field threshold) when the sensor element 216 is outside of the first position range and generate a second signal (e.g., a signal indicating that the sensor element 216 has moved relative to the valve orientation sensor 414a indicating that the valve element 210 is in another orientation (e.g., the open orientation)). The container engine 406 may log each open orientation event and closed orientation event and associate a time with each event as the open orientation event and the closed orientation event occurs and store the events in the node database 408. The container engine 406 may also generate a valve event notification upon each change in valve orientation such that the container engine 406 may provide the notification over the WAN via the communication interface 410a and/or over the LAN via the communication interface 410b. While a Hall effect sensor is described as detecting movement of the valve element 210 in the valve housing 206, one of skill in the art will recognize that the valve orientation sensor 414a may include other sensors that may detect position/orientation of the valve element 210 (e.g., open or closed position).

In another example, the sensor system 414 may include other sensors such as a level sensor 414b. The level sensor 414b may be included on the rear wall 402f and/or other wall of the node chassis 402 such that when the container valve node system 134, including the node device 400, is coupled to the valve system 132/204, the level sensor 414b is adjacent the container chassis 104. In one example, the level sensor 414b may include a temperature sensor. Because the contents of the container 102 are a liquid or possibly a granular solid, the content of the container 102 may have a higher heat capacity (or different heat capacity) than the air surrounding the container chassis 104. As such, the temperature of the container chassis 104 will change at a different rate than the temperature of the ambient air around the container system 100. Therefore, the rate of change of temperature at the level sensor 414b may satisfy a predetermined temperature change indicating that the contents of the container volume 106 have fallen to a level that is below the position of the level sensor 414b adjacent the container chassis 104. Thus, the container engine 406 may monitor the temperature signals provided by the level sensor 414b and when a rate of change in temperature is indicated by the temperature signals that exceeds the predetermine temperature change threshold, the container engine 406 may generate a level notification. In other embodiments, the container engine 406 may use the temperature signals provided by level sensor 414b to monitor for other temperature conditions as well (e.g., predetermined temperature thresholds) that cause the container engine 406 to generate temperature notifications (e.g., whether the contents of the container volume are too hot and/or too cold). In other embodiments, the level sensor 414b may include a capacitance sensor that may detect a change in capacitance of the container chassis 104 when the level of the contents of the container volume 106 falls below the position of the level sensor 414b adjacent the container chassis 104. As such, the container engine 406 may monitor the capacitance signals provided by the level sensor 414b and when a capacitance change indicated by the capacitance signals satisfies a predetermine capacitance threshold, the container engine 406 may generate a level notification. The container engine 406 may store any of the level sensor information and/or level notifications in the node database 408 and may associate a time with each level sensor information and/or level notification. In various embodiments, the container engine 406 may provide the level sensor information and/or the level notifications over the WAN via the communication interface 410a and/or over the LAN via the communication interface 410b.

In various embodiments, a combination of the information provided by the level sensor 414b, the valve orientation sensor 414a and/or signal strength of the various communication interfaces 410a and/or 410b of the communication system 410 may be used to detect a container valve node system detachment event that indicates that at least the node device 400 has been removed from the container chassis 104. For example, the information provided by the level sensor 414b, the valve orientation sensor 414a and/or signal strength of the various communication interfaces 410a and/or 410b of the communication system 410 may detect that the node device 400 has been decoupled from the valve system coupling device 300, that the valve system coupling device 300 has been decoupled from the valve system 204 and/or the container outlet 109, or that the node device 400/valve system coupling device 136/300 has been moved relative to a position that the node device 400 is supposed to be located (e.g., the strap portion 302 is rotated about the valve housing 206). For example, the container engine 406 via the sensor system 414 may detect changes in both the signals provided by the valve orientation sensor 414a and the level sensor 414b at substantially the same time, which may indicate removal of node device 400 from its position relative to the container chassis 104 and valve system 132/204. In another example, the signal strength of one or more of the communication interfaces 410a and 410b may change at substantially the same time as the sensor signal provided by the valve orientation sensor 414a and/or the level sensor 414b. However, in other embodiments the node device 400 may include an additional motion sensor that detects when the node device 400 moves relative to the valve housing 206 and/or the container chassis 104. For example, the motion sensor may include a Hall effect sensor that is located in the bottom wall 402b of the node chassis 402 and detect a magnet that is positioned on the valve housing. In another example, the Hall effect sensor may be located in the rear wall 402f and/or the top wall 402a of the node chassis 402 and detect a magnet that is positioned on the container chassis 104. As such, the Hall effect sensor may provide a motion signal to the container engine 406 when the Hall effect sensor no longer detects the magnet that is positioned on a static component of the valve system 132/204 and/or the container chassis 104 indicating that the node device 400 has move relative to those magnets. The container engine 406 may store any container valve node system detachment events in the node database 408 and may associate a time with each container valve node system detachment event based on when each container valve node system detachment event occurred. In various embodiments, the container engine 406 may provide a container valve node system detachment event notification over the WAN via the communication interface 410a and/or over the LAN via the communication interface 410b.

While specific security sensors 414a and 414b have been described as being included in the sensor system 414, one of skill in the art in possession of the present disclosure will recognize that other security sensors or information sensors may be included in the sensor system 414. For example, the sensor system 414 may include a load sensor, a humidity sensor, a chemical agent sensor, a positioning sensor, an orientation sensor, a pressure sensor, a movement sensor (e.g., an accelerometer), a shock sensor, and/or any other sensors that would be apparent to one of skill in the art in possession of the present disclosure.

In various embodiments, the node device 400 may include a user Input and/or Output (I/O) system 416 that may include one or more user input subsystems and/or user output subsystems. For example, the user I/O system 416 may include a button 416a that may be used to power on or power off the node device, provide instructions to the container engine 406, and/or any other functionality that would be apparent one of skill in the art in possession of the present disclosure. In the illustrated embodiment, the button is located on the front wall 402e of the node device 400 but could be located on any of the walls 402a-402f. The user I/O system 416 may include one or more visual indicators 416b (e.g., light emitting diodes (LEDs)) that may provide an indication of a status of any of the components of the node device 400 (e.g., a status of the connection of the communication interfaces 410a and/or 410b, an event notification (e.g., a level event notification, a valve orientation notification, a container valve node system detachment event, and/or any other event notification), a power status, and/or any other event/notification that would be apparent to one of skill in the art in possession of the present disclosure. While a specific node device 400 has been illustrated, one of skill in the art in possession of the present disclosure will recognize that node devices (or other devices operating according to the teachings of the present disclosure in a manner similar to that described below for the node device 400) may include a variety of components and/or component configurations for providing the functionality discussed below, while remaining within the scope of the present disclosure as well.

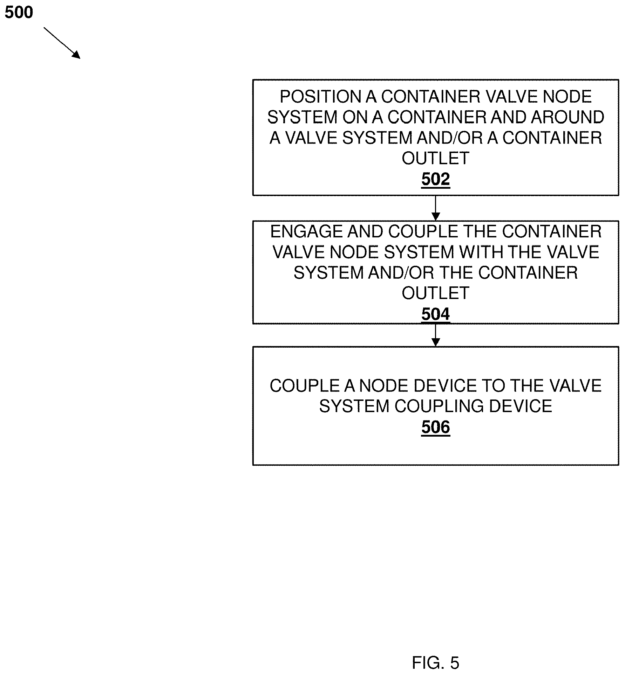

Referring now to Fig. 5, a method 500 for coupling a container valve node system to a container is illustrated. As discussed above, the systems and methods of the present disclosure provide a valve system with the container valve node system that is relatively easy to add and remove from the valve system coupled to a container during a container lifecycle. The container valve node system may be configured to couple to and decouple from the valve system when the valve system is coupled to the container chassis. However, in other embodiments, the container valve node system may only be coupled to the container prior to the valve system being coupled to the container chassis such that the container valve node system may be removed when the valve system is removed. The container valve node system may provide a node device for the container and the vale system that can detect and report security events (e.g., when the valve was opened and/or closed, changes in temperature to the content of the container volume, when the contents of the container volume reach a particular level, etc.) during the container lifecycle. The container valve node system may include a valve system coupling device that is configured to couple with at least one of a container outlet the valve system. The container valve node system may include a node device coupled to the valve system coupling device, the node device may provide a container engine that communicates container system information associated with the container system via a communication system. The configuration of the container valve node system may be such that when coupled to the valve system and/or the container outlet, the node device is substantially adjacent the container chassis to detect a change in the level of the contents of the container volume and/or substantially adjacent a stem or a handle that are coupled to a valve of the valve system such that when a change in orientation of the stem or the handle occurs and is detected, a valve orientation event is generated. As such, the node device may track level events, valve orientation events, and other events associated with the container system. While specific components and component configurations for the container closure node system are illustrate and described below, a wide variety of component and component configurations are envisioned as falling within the scope of the present disclosure as well.

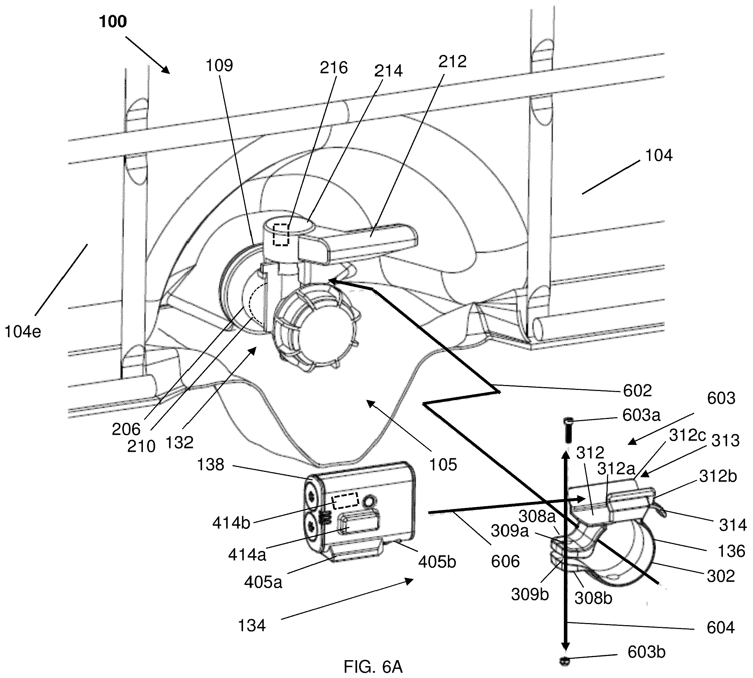

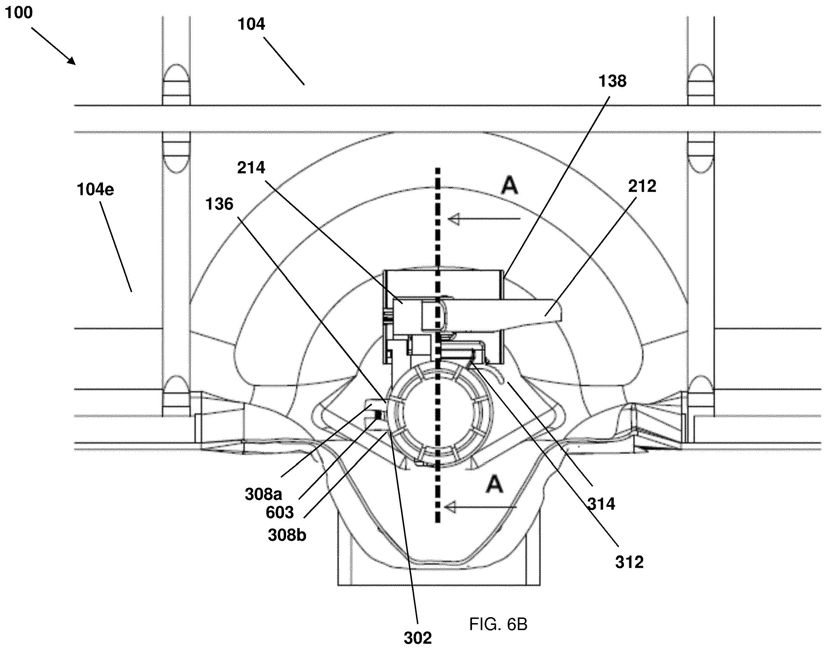

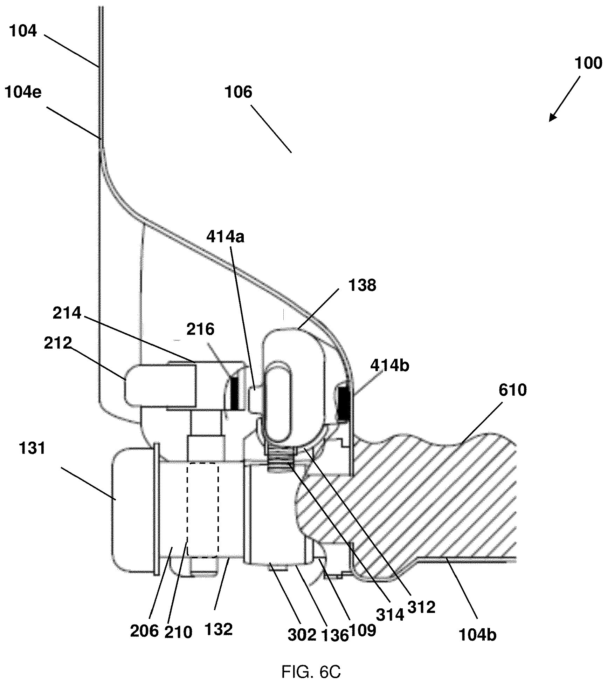

The method 500 begins at block 502 where a container valve node system is positioned on a container and around a valve system and/or a container outlet. In an embodiment, at block 502 and with reference to Figs. 6A, 6B, and 6C, the container valve node system 134 may be positioned on the container 102 (e.g., the front wall 104e) and around the valve housing 206 of the valve system 132/204 as indicated by arrow 602. Specifically, the valve system coupling device 136/300 may be fitted around the valve housing 206. However, as discussed above, the valve system coupling device 136/300 may be fitted around the container outlet 109 in addition to or alternatively to the valve housing 206. In yet some other embodiments, the valve system coupling device 136/300 may be positioned adjacent the container chassis 104 and the container outlet 109 prior to the valve system 204 being coupled to the container outlet 109.

The method 500 then proceeds to block 504 where the container valve node system is engaged and coupled with the valve system and/or the container outlet. In an embodiment, at block 504 and with reference to Figs. 6A, 6B, and 6C, the securing element engagement member 309a located on the strap securing element 308a on the first end 302a of the strap portion 302 may be engaged and coupled to the securing element engagement member 309b located on the strap securing element 308b on the second end 302b of the strap portion 302. For example, a fastener system 603 that includes a bolt 603a and a nut 603b may be inserted into securing element engagement members 309a and 309b to couple the valve system coupling device 136/300 to the valve system 204 and/or the container chassis 104 (e.g., via the container outlet 109). The bolt 603a and the nut 603b may be tightened such that the strap portion 302 is frictionally secured to the valve housing 206 and/or the container outlet 109. In some embodiments, the container valve node system 134 may be engaged and coupled with the valve system 132/204 and/or the container outlet 109 when valve system 132/204 is coupled to the container outlet 109.

The method 500 may then proceed to block 506 where the node device is coupled to the valve system coupling device. In an embodiment, at block 506 and with reference to Figs. 6A, 6B, and 6C, the node device 138/400 may be coupled to the valve system coupling device 136/300 as indicated by arrow 606 in Fig. 6A. In an embodiment, the node device 138/400 may be coupled to the valve system coupling device 136/300 prior to the valve system coupling device 136/300 being coupled to the valve housing 206 and/or the container outlet 109. However, in other embodiments and as illustrated in Figs. 6A, 6B, and 6C the node device 138/400 may be coupled to the valve system coupling device 136/300 during or after the valve system coupling device 136/300 being coupled to the valve housing 206 and/or the container outlet 109. For example, the strap securing elements 405a and/or 405b may be configured to engage the node device engagement member 312 including corresponding node device securing elements 312a and 312b. In a specific example, and as indicated by the arrow 606, the node device 138/400 may be slid into the slot 313 defined by the node device securing elements 312a, 312b, and 312c. The strap securing element 405a may engage the node device securing element 312a and the strap securing element 405b may engage the node device securing element 312b. The rear wall 402f of the node chassis 402 may engage the node device securing element 312c. As such and as illustrated in Figs. 6A and 6B, the node device 138/400, when secured to the valve system coupling device 136/300 that is coupled to the valve housing 206 and/or the container outlet 109, may be orientated such that the valve orientation sensor 414a is substantially adjacent the sensor element 216 included in the stem 214/handle 212 when the valve element 210 is in the closed orientation. However, it is contemplated that the node device 138/400, when secured to the valve system coupling device 136/300 that is coupled to the valve housing 206 and/or the container outlet 109, may be orientated such that the valve orientation sensor 414a is substantially adjacent the sensor element 216 included in the stem 214/handle 212 when the valve element 210 is in the open orientation. In other embodiments, the node device 138/400, when secured to the valve system coupling device 136/300 that is coupled to the valve housing 206 and/or the container outlet 109, may be orientated such that the level sensor 414b is substantially adjacent the container chassis 104.

In various embodiments of method 500, after the container valve node system 134 is assembled and coupled to the valve system 204 and/or container outlet 109, a user may decouple the container valve node system 134 from the valve system 204 and/or container outlet 109. For example, the user may remove the bolt 603a and the nut 603b from the securing element engagement members 309a and 309b to decouple the valve system coupling device 136/300 from the valve system 204 and/or the container chassis 104. In other examples, the user may remove the node device 138/400 from the valve system coupling device 136/300 by activating the node device release member 314 that disengages the node device securing element 312a and the strap securing element 405b. The user may then slide the node device 138/400 in the opposite direction of arrow 606.

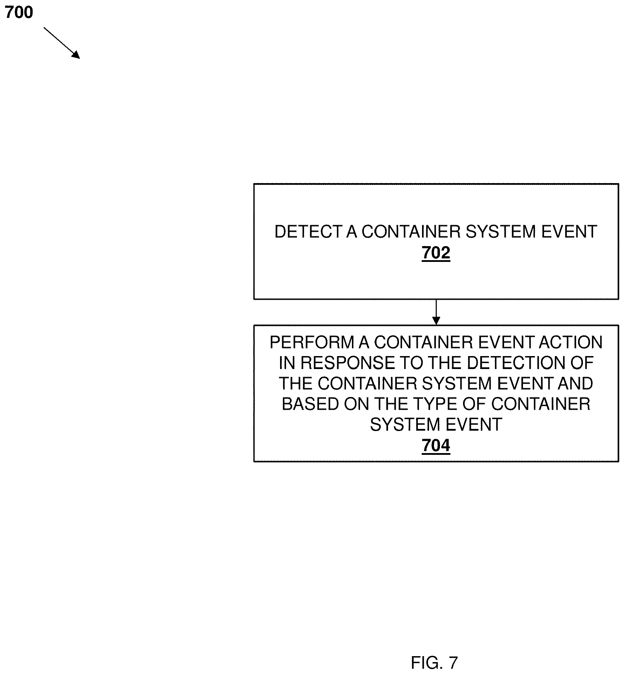

Referring now to Fig. 7, a method 700 for providing container security is illustrated. The method 700 may begin at block 702 where the node device detects a container system event. In an embodiment of block 702, the container engine 406 of the node device 138/400 may receive, via the sensor system 414 and/or the communication system 410, sensor signals and/or event notifications. The container engine 406 may process the sensor signals to determine whether any conditions are satisfied. For example and with reference to Fig. 6C, the container engine 406 may monitor sensor signals from the valve orientation sensor 414a. The sensor signals may indicate to the container engine 406 whether the valve element 210 included in the valve system 204 is in the open orientation or the closed orientation. The container engine 406 may monitor for signals indicating each orientation such as detecting or not detecting a magnetic field from the sensor element 216 at a magnetic field threshold. A container system event may be detected based on any change in orientation of the valve element.

In another example and with reference to Fig. 6C, the container engine 406 may monitor sensor signals from the level sensor 414b. For example, the level sensor 414b, as discussed above, my include a temperature sensor that is substantially adjacent (e.g., in contact with or within a predetermined distance from the container chassis (e.g., 1 mm, 2mm, 5mm, and/or any other appropriate distance that would be apparent to one of skill in the art in possession of the present disclosure) to the container chassis 104. The level sensor 414b may provide temperature signals to the container engine 406. The container engine 406 may monitor the temperature signals such that if the temperature signals satisfy a predetermined temperature condition, a container system event may be detected. For example, the predetermine temperature condition may be a rate of change in temperature, a predetermined threshold temperature, and/or any other temperature condition that would be apparent to one of skill in the art in possession of the present disclosure. For example, if the content 610 in the container volume 106 falls below or near the level sensor 414b, the temperature at the level sensor 414b may change relatively rapidly, which may satisfy the temperature condition and cause the container engine 406 to determine that a container system event has occurred relating to the level of the contents 610 falling below the level sensor 414b.

In other examples of container system events for which the container engine 406 monitors, the container engine 406 may monitor for a node device decoupling event. As discussed above, the container engine 406 may monitor a motion sensor that indicates when the node device 138/400 is in its operating orientation with the container chassis 104 and/or the valve system 132/204 or when the node device 138/400 is not in its operating orientation. The container engine 406 may use the signals from the motion sensor to determine the node device decoupling event or a node device coupling event. In other examples, the container engine 406 may monitor sensor signals received by a combination of two or more of the valve orientation sensor 414a, the level sensor 414b, and/or signal strength changes of the communication system 410 to determine whether a node device decoupling event has occurred. For example, if a level condition and a valve orientation condition (e.g., valve open orientation indicated) is satisfied at the same time or substantially at the same time, the container engine 406 may determine that the node device 138/400 is no longer present at its operating orientation. In other examples, if there is a change in signal strength detected at the communication interfaces 410a and/or 410b and the container engine 406 detects that the valve element 210 is in the open orientation at the same time or substantially at the same time (e.g., within 1 sec, 2 sec, etc.), then the container engine 406 may determine that node device 138/400 is no longer present at its operating orientation. Other combinations of the sensor signals provided by various sensors of the sensor system 414 and the communication system 410 may be used to determine presence of the node device 138/400 at its operating orientation.

In other embodiments, the container engine 406 may receive sensor signals from other sensors of the sensor system 414 and/or sensor signals from sensors in other node devices (e.g., the node device 126) via the communication system 410 and determine whether any of those sensors signals satisfy a predetermined condition indicating a container system event. In yet other examples, the container engine 406 may receive container event notifications from other nodes (e.g., the node device 126) where the container event has been determined by that node device. While specific sensor signals are discussed, one skill in the art in possession of the present disclosure will recognize that other sensors that may be included in the node device 138/400 may provide a sensor signal to the container engine 406 while still falling within the scope of the present disclosure. For example, an accelerometer may detect a sudden movement, a gyroscope may indicate improper orientation, and/or other sensors discussed above that may satisfy a container system event.

The method 700 may then proceed to block 704 where a container event action is performed in response to the detection of the container system event and based on the type of container system event. In an embodiment, at block 704, if the container engine 406 detects a container system event at block 702, the container engine 406 may perform a container event action based on the container system event. For example, the container engine 406 may provide a container system event notification over the communication interface 410a and/or 410b such that a server device, another node device, a user device, and/or any other device may receive the container system event notification. The container system event notification may include the type of container system event, a time at which the container system event occurred, any relevant sensor information and/or any other information that would be apparent to one of skill in the art in possession of the present disclosure. The container system event notification may include an identifier for the container system 100, the node device 138/400, a node device (e.g., the node device 126) if the container system event was detected by a different node device than the node device 138/400, a valve system, and/or any other identifier of components of the container system 100 or any other container information that would be apparent to one of skill in the art in possession of the present disclosure. In other examples, the container event action may include storing the container system event notification in the node database 408 until the communication interface 410a has established a link with the WAN and/or until a user device accesses the container system event notification via the communication interface 410b. In yet another example, the container event action may include the container engine 406 providing an indication of the container system event via the user I/O system 416 (e.g., a visual indication via the visual indicator 416b. While specific container event actions are described, one of skill in the art in possession of the present disclosure will recognize that other container event actions may be performed and still fall under the scope of the present disclosure such as those that are described in the U.S. Patent No. 10,538,371 and U.S. Patent Application No. 16/451,879, filed on June 25, 2019, entitled "Container Security System."

Thus, systems and methods have been described that provide for a container valve node system, attachment/release of the container valve node system from a container closure, and the detection and notification of container system events. The container valve node system may include a valve system coupling device that includes one or more strap portions that may couple to a valve system and/or container outlet. The valve system coupling device may include a node device engagement member that may couple with a node device. When the strap portion is coupled with the valve system and/or the container outlet, the node device may be positioned substantially adjacent the container chassis and/or a handle or stem of the valve system such that the node device, via a sensor system, may monitor the level of contents in the container volume and/or the orientation of a valve element in the valve system, respectively. The node device engagement member may include a node device release member that may be activated to release the node device form the valve system coupling device and securing elements on the strap portion may be disengaged to enable a quick release of the strap portion to quickly decouple the container valve node system from the valve system. As such, the systems and method of the present disclosure provide a valve system with the container valve node system that is relatively easy to add and remove from the valve system coupled to the container during a container lifecycle. The container valve node system also be configured relative to the valve system and the container chassis such that conventional tools for removing the valve system or accessing a valve port may be used. The container valve node system may provide a container engine for the container and the valve system that can detect and report container system events during the container lifecycle (e.g., when the valve system was opened, closed, changes in temperature, changes in the level of the content of the container volume, and other events that would be apparent to one of skill in the art in possession of the present disclosure).

Although illustrative embodiments have been shown and described, a wide range of modification, change and substitution is contemplated in the foregoing disclosure and in some instances, some features of the embodiments may be employed without a corresponding use of other features. Accordingly, it is appropriate that the appended claims be construed broadly and in a manner consistent with the scope of the embodiments disclosed herein.

## Claims

1. A container system, comprising:
a container that includes a container chassis that defines a container volume and a container outlet having a first aperture;
a valve system coupled to the container outlet, and
a container valve node system, wherein the container valve node system comprises:
a valve system coupling device coupling the container valve node system to at least one of the container outlet or the valve system; and
a node device coupled to the valve system coupling device, wherein the node device includes a node chassis that houses:
a communication system;
a processing system coupled to the communication system; and
a memory system that is coupled to the processing system and that includes instruction, that when executed by the processing system, causes the processing system to provide a container engine that is configured to:
communicate container system information associated with the container system via the communication system.

2. The container system of claim 1, wherein the container valve node system includes a first sensor coupled to the node device, and
wherein, the first sensor coupled to the node device is substantially adjacent the container chassis to permit the first sensor to generate at least one of container chassis information included in the container system information or container volume information included in the container system information when the valve system coupling device is coupled to at least one of the valve system and the container outlet.

3. The container system of claim 1, wherein the valve system coupling device is configured to couple to the at least one of the container outlet or the valve system subsequent to the valve system being coupled to the container outlet, and wherein preferably the valve system coupling device includes at least one strap portion that is configured to couple to and decouple from a valve housing included on the valve system.

4. The container system of claim 1, wherein the valve system coupling device, when coupled to the at least one of the container outlet or the valve system, prevents movement of the container valve node system in relation to the container chassis and the valve system.

5. The container system of claim 1, wherein the valve system comprises:
a valve housing defining an interior chamber connecting a container outlet port and a front port, wherein the container outlet port is coupled to the container outlet;
a valve element that is rotationally supported in the interior chamber for movement between a valve open position and a valve closed position;
a stem that extends through an aperture in the valve housing and coupled with the valve element; and
a handle coupled to the stem for selective rotation of the valve element via the stem.

6. The container system of claim 5, wherein the container valve node system includes a first sensor coupled to the node device, and
wherein, the first sensor is coupled to the node device such that, when the valve system coupling device is coupled to at least one of the valve system and the container outlet, the first sensor is positioned to detect when the valve element is in the valve open position and detects when the valve element is in the valve closed position, and the first sensor is configured to generate a valve open signal when the valve element is in the valve open position and a valve closed signal when the valve element is in the valve closed position.

7. The container system of claim 6, wherein the first sensor includes a Hall effect sensor and a magnet is coupled to at least one of the stem or the handle, and
wherein the magnet is substantially adjacent the Hall effect sensor when the valve element is in the valve closed position.

8. The container system of claim 1, wherein the node device is coupled to the valve system coupling device via a node device engagement member that is coupled to the valve system and that includes at least one node device securing element that when engaged with a respective at least one valve system coupling securing element included on the node device prevents at least one of vertical motion or horizontal motion of the node device relative to the valve system coupling device, wherein preferably the node device engagement member includes at least one release mechanism that disengages at least one node device securing element from its respective at least one valve system coupling securing element to permit at least one of vertical motion or horizontal motion of the node device in relation to the valve system coupling device.

9. The container system of claim 1, wherein the communication system includes a first type communication interface for communicating the container system information over a wide area network, and a second type communication interface for communicating over a local area network with a second node device, wherein preferably the second node device is coupled to the container chassis.

10. A container valve node system, comprising:
a valve system coupling device that is configured to couple with at least one of a container outlet defined by a container chassis that defines a container volume or a valve system that is configured to couple to the container outlet; and
a node device coupled to the valve system coupling device, wherein the node device includes a node chassis that houses:
a communication system;
a processing system coupled to the communication system; and
a memory system that is coupled to the processing system and that includes instruction, that when executed by the processing system, causes the processing system to provide a container engine that is configured to:
communicate container system information associated with a container system via the communication system.

11. The container valve node system of claim 10, wherein the node chassis comprises:
a top wall;
a bottom wall that is located opposite the node chassis from the top wall;
a first side wall that is located opposite the node chassis from a second side wall and that both extend between the top wall and the bottom wall;
a front wall that extends between the top wall, the bottom wall, the first side wall, and the second side wall; and
a rear wall that that is located opposite the node chassis from the front wall and that extends between the top wall, the bottom wall, the first side wall, and the second side wall, wherein at least a portion of at least one of the top wall or the rear wall is defined to be substantially adjacent the container chassis when the valve system coupling device is coupled with the at least one of the container outlet or the valve system; wherein preferably at least the portion of the at least one of the top wall or the rear wall that is substantially adjacent the container chassis includes a level sensor coupled to the processing system.

12. The container valve node system of claim 10, wherein the node chassis comprises:
a top wall,
a bottom wall that is located opposite the node chassis from the top wall,
a first side wall that is located opposite the node chassis from a second side wall and that both extend between the top wall and the bottom wall;
a front wall that extends between the top wall, the bottom wall, the first side wall, and the second side wall; and
a rear wall that that is located opposite the node chassis from the front wall and that extends between the top wall, the bottom wall, the first side wall, and the second side wall, wherein at least a portion of the front wall is configured to be substantially adjacent the container chassis when the valve system coupling device is coupled with the at least one of the container outlet or the valve system.

13. The container valve node system of claim 12, wherein the at least the portion of the front wall that is configured to be substantially adjacent the container chassis when the valve system coupling device is coupled with the at least one of the container outlet or the valve system includes a valve orientation sensor coupled to the processing system.

14. The container valve node system of claim 10, wherein the node device is coupled to the valve system coupling device via a node device engagement member that is coupled to the valve system coupling device and that includes at least one node device securing element that when engaged with a respective at least one strap securing element included on the node device prevents at least one of vertical motion or horizontal motion of the node device in relation to the valve system coupling device, wherein preferably the node device engagement member includes at least one release mechanism that disengages at least one node device securing element from its respective at least one strap securing element to permit at least one of vertical motion or horizontal motion of the node device relative to the valve system coupling device.

15. A valve system coupling device, comprising:
at least one strap portion that is configured to couple with and decouple from at least one of a container outlet defined by a container chassis that defines a container volume or a valve system that is configured to couple to the container outlet; and
a node device engagement member that is coupled to the valve system coupling system and that includes at least one node device securing element that when engaged with a respective at least one strap securing element using a first force requires a second force that is greater than the first force to decouple the at least one node device securing element from the respective at least one strap securing element.
